(19) Europäisches Patentamt
European Patent Office
Office européen des brevets

(11) **EP 2 768 651 B1**

(12) **EUROPEAN PATENT SPECIFICATION**

(45) Date of publication and mention of the grant of the patent:
**12.09.2018 Bulletin 2018/37**

(51) Int Cl.:
*C08L 69/00* *(2006.01)*   *B29C 45/76* *(2006.01)*
*B29K 69/00* *(2006.01)*   *B29C 45/00* *(2006.01)*

(21) Application number: **12779267.9**

(22) Date of filing: **18.10.2012**

(86) International application number:
**PCT/US2012/060753**

(87) International publication number:
**WO 2013/059415 (25.04.2013 Gazette 2013/17)**

(54) **METHODS FOR ENHANCING FLAME RETARDANCE OF MOLDED POLYMERIC MATERIALS**

VERFAHREN ZUR VERBESSERUNG DER FLAMMVERZÖGERUNG VON GEFORMTEN POLYMERMATERIALIEN

PROCÉDÉS D'AMÉLIORATION DE LA RÉSISTANCE À LA FLAMME DE MATIÈRES POLYMÈRES MOULÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2011 US 201161548509 P**

(43) Date of publication of application:
**27.08.2014 Bulletin 2014/35**

(73) Proprietor: **SABIC Global Technologies B.V.**
**4612 PX Bergen op Zoom (NL)**

(72) Inventor: **ASTHANA, Himanshu**
**Mt. Vernon, IN 47620-9367 (US)**

(74) Representative: **Modiano, Micaela Nadia et al**
**Modiano & Partners**
**Thierschstrasse 11**
**80538 München (DE)**

(56) References cited:
**EP-A1- 0 524 731     EP-A1- 0 595 141**
**WO-A1-89/10829     US-A- 5 324 473**

- **J. GREENER AND G.H. PEARSON: "Orientation Residual Stresses and Birefringence in Injection Molding", JOURNAL OF RHEOLOGY, vol. 27, no. 2, 1983, pages 115-134, XP009165358,**
- **"LEXAN* 9945A Resin Polycarbonate", SABIC Innovative Plastics Europe , 17 November 2009 (2009-11-17), pages 1-3, Retrieved from the Internet: URL:http://www.settredcn.com/ueditor/asp/upload/PC/PC%209945A%20datasheet.pdf [retrieved on 2017-03-29]**

## Description

Field of the Invention

The present disclosure relates generally to methods for manufacturing molded polymeric articles and, more particularly, to methods for enhancing the flame retardance of a molded polymeric material.

Background of the Invention

There are growing interests in the area of flame retardant (FR) thermoplastic materials, including the use of flame retardant thermoplastic materials in injection molded thin wall applications. Consistency in flame rating measurement is important in flame retardant resin development and commercialization. However, flame performances are difficult to assess due to the abundance of factors that can influence the material behavior, such as, for example, molding conditions, operator training and orientation of specimen during testing.

The role of mechanical and residual stresses on physical properties of polymers and plastics is well-documented in the literature.

US5324473 (A) concerns methods and apparatus for molding a thermoplastic article bring the surface of the mold cavity above the flow stress relaxation temperature of the molten plastic during molding of a part sufficiently long enough to relax the resin at the surface of the molded part and produce negligible residual stress.

EP 0595141 (A1) relates to a polycarbonate-polyorganosiloxane copolymer and a respective resin composition.

WO 8910829 (A1) relates to a method of molding plastic, especially injection molding or compression molding and a mold therefor involving causing the surface of the mold cavity to have a temperature above the solidification temperature of the molten plastic during molding of a part. The temperature of the surface of the mold cavity is preferably mantained near or above the solidification temperature of the molten plastic as the center of the plastic in the mold cavity cools from a temperature above the solidification temperature toward the solidification temperature, thereby reducing flow-induced and temperature gradient-induced orientation stresses in the solidified plastic. A layer of insulation about the mold cavity and gate. if any, allows heat from the molten plastic to raise the temperature of the mold cavity surface to the required level.

EP 0524731 (A1) concerns new thermoplastic blends having processing, low temperature impact strength and flammability advantages.

J. GREENER AND G.H. PEARSON, "Orientation Residual Stresses and Birefringence in Injection Molding". JOURNAL OF RHEOLOGY. (1983), vol. 27, no. 2, pages 115 - 134, XP009165358 [Y] 2 relates to a simple mathematical model for predicting residual stresses in injection □ molded parts. The use of a nonlinear viscoelastic constitutive equation allows the model to yield better quantitative results than previously obtained. The model fails to predict the existence of birefringence along the midplane of the molded part, which is thought to be due to inhomogeneous cooling (i.e., thermal stress).

However, there remains a need for an understanding of the role of molding process conditions on flame properties of polymers..

There also remains a need in the art for a greater understanding of the role of residual stresses on flame retardance properties and improved methods for manufacturing molded polymeric materials in view of this greater understanding. These needs and other needs are satisfied by the methods and systems described in the present disclosure.

Summary of the Invention

In accordance with the purpose(s) of the invention, as embodied and broadly described herein, this disclosure, in one aspect, provides improved methods for manufacturing molded polymeric articles having enhance flame retardant properties.

The present invention provides a method for manufacturing a flame retardant molded polymeric article by injection molding, wherein the moldable polymeric material is polycarbonate, the method comprising the steps of (a) selecting a polycarbonate that is transparent; (b) determining a desired flame retardancy for a molded article comprising the selected polycarbonate: (c) identifying a residual stress profile for a flame bar molded from the polycarbonate that correlates to the desired flame retardancy; and (d) adjusting a molding process condition so as to produce the molded polymeric article having the identified stress profile, wherein the molding process condition comprises barrel temperature and injection speed, and wherein the molded polymeric article exhibits a flame retardance characterized as a V0 flame retardance classification under the UL-94 test method.

Additional aspects of the invention will be set forth in part in the description which follows, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, since the scope of the invention is defined in the appended claims.

Brief Description of the Figures

The accompanying figures, which are incorporated in and constitute a part of this specification, illustrate several aspects and together with the description serve to explain the principles of the invention.

FIG. 1 is a schematic representation of the template used to develop a stress map of the flame bars evaluated in the Examples described herein.

FIG. 2 is a contour plot for the designed experiment described herein showing the relationship between p(FTP) as a function of barrel temperature and injection speed.

FIG. 3 is an illustration of the flame bar stress profile under polarized light for 4 flame bars processed under different molding conditions as described in the Examples herein.

FIG. 4 is a plot of the stress values at different points going from gate end (point 1) at location 'top' for flame bars evaluated in the Examples described herein.

FIG. 5 is a plot of the stress values at different points going from gate end (point 1) for location 'middle' for flame bars evaluated in the Examples described herein.

FIG. 6 is a plot of the stress values at different points going from gate end (point 1) for location 'bottom' for flame bars evaluated in the Examples described herein.

Detailed Description of the Invention

The present invention can be understood more readily by reference to the following detailed description of the invention and the Examples included therein.

Before the present compounds, compositions, articles, systems, devices, and/or methods are disclosed and described, it is to be understood that the terminology used herein is for the purpose of describing particular aspects only and is not intended to be limiting. Although any methods and materials similar or equivalent to those described herein can be used in the practice or testing of the present invention, exemplary methods and materials are now described.

As used in the specification and the appended claims, the singular forms "a," "an" and "the" include plural referents unless the context clearly dictates otherwise. Thus, for example, reference to "a processing condition" includes two or more different process conditions unless the context clearly indicates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "optional" or "optionally" means that the subsequently described event or circumstance can or can not occur, and that the description includes instances where said event or circumstance occurs and instances where it does not.

Throughout this specification, unless the context requires otherwise, the word "comprise," or variations such as "comprises" or "comprising," will be understood to imply the inclusion of a stated material, component, value, measurement, composition, step or group of stated materials, components, values, measurements, compositions, or steps but not the exclusion of any other stated material, component, value, measurement, composition, step or group of stated materials, components, values, measurements, compositions, or steps.

As briefly summarized above, the present disclosure has investigated the role of post-molding residual stresses and the relation of such stresses to the flame retardance properties for various moldable transparent thermoplastic polymers. For example, according to embodiments of the disclosure, it was observed that the flame retardance properties of molded thermoplastic materials are directly related to the post-molding residual stress profile of the resulting molded article. In turn, it was further observed that residual stress profiles within a molded article are directly influenced by the processing conditions used to manufacture the molded article. In view of this investigation, improved methods such as those summarize above are provided for enhancing the flame retardance of molded thermoplastic articles.

As used in the instant disclosure, the term molding process refers to any conventionally known molding process that is used to manufacture a molded thermoplastic article. Exemplary molding processes include injection molding, extrusion molding, and blow molding. To that end, the term or phrase "molding process conditions" as used herein refers to one or more processing conditions of a particular molding method that can be varied or altered. For example, in the context of an injection molding process, exemplary molding process conditions of the invention include barrel temperature and injection speed and optionally hold pressure, and/or switch point.

The polymeric materials selected for use with the methods of the present disclosure include any commercially available or otherwise conventionally known transparent thermoplastic polymers that are capable of being molded by one or more molding processes described herein. For example, and without limitation, a selected moldable polymeric material can be a polycarbonate, polyester, polypropylene, aromatic polyester, polyetherimide, an acrylic polymer, or any blend thereof. According to the instant invention, the selected polymeric material is a polycarbonate. The polycarbonate can be linear, branched, or a combination of linear and branched polycarbonates.

The methods can be used to manufacture a variety of flame retardant molded articles. For example, flame retardant molded articles include thin walled molded articles. Thin walled molded articles include articles having a wall thickness less than 2.0 millimeters (mm), less than and including 1.8 mm, less than and including 1.5 mm, less than and including 1.0 mm, or even less than and including 0.8 mm. For example, a thin walled flame retardant article can have a wall thickness of about 1.8 mm. In another example, a thin walled flame retardant article can have a wall thickness of about 0.8 mm. The flame retardant molded article can be a flame bar configured for use in a flame retardance test procedure. The transparent molded articles can exhibit a transmittance of greater than 89%, including transmittance values of at least 90%, at least 91%, at least 92%, at least 93%, at least 94%, at least 95%, at least 96%, at least 97%, at least 98%, and at least 99%, measured at a thickness of 3 mm according to ASTM method D1003. For example, when tested in the form of a 3.2 mm thick test sample according to ASTM D1003-00, procedure B using CIE standard illuminant C.

Flame retardance as referred to in the instant disclosure can be characterized by any conventionally accepted standard or testing method. However, according to the invention, flame retardance as referred to herein is characterized by the Underwriter's Laboratories UL-94 test. This standard classifies plastics according to how they burn in various orientations and thicknesses. From lowest (least flame-retardant) to highest (most flame-retardant), the classifications are: HB: slow burning on a horizontal specimen; burning rate less than 76 mm/min for thickness less than 3 mm; V2: burning stops within 30 seconds on a vertical specimen; drips of flaming particles are allowed; V1: burning stops within 30 seconds on a vertical specimen; drips of particles allowed as long as they are not inflamed; and V0: burning stops within 10 seconds on a vertical specimen; drips of particles allowed as long as they are not inflamed. According to the present invention, the flame retardant molded articles of the present invention are characterized by the above-described UL-94 test as passing or satisfying the V0 standard.

As illustrated in the Examples which follow, the present disclosure has identified a relation between the residual stress profile of a molded article and the flame retardance properties of the molded article. Further, the stress profile is directly impacted by the molding process conditions utilized to manufacture the molded article. As such, according to aspects of the invention, a residual stress profile for a molded article can be identified that correlates to a particularly desired flame retardance. Once this determination has been made, one or more molding process conditions can be adjusted to manufacture a molded polymeric article exhibiting the desired flame retardant properties.

For example, according to aspects of the invention where a selected polymeric material is a polycarbonate, a desired residual stress profile can be determined or identified for a flame bar molded from the polycarbonate. In particular, the identified residual stress profile for the molded flame bar can be a residual stress profile indicative of relatively lower stress at or near a gate end of the flame bar (e.g., compared to the opposite end of the flame bar). Still further, the identified residual stress profile can be further indicative of a maximum residual stress occurring at a distance furthest from the gate end of the flame bar. Upon determination of the desired or predetermined stress profile, one or more molding process conditions can be adjusted to thereby manufacture a molded article having the desired flame retardant properties that correlate to the identified or determined stress profile. For example, adjusted molding process conditions can comprise barrel temperature and injection speed and optionally hold pressure and/or switch point. For example, according to the invention, whereby a molded article is manufacture by injection molding, the adjusted molding process conditions comprise barrel temperature and injection speed. Still further, in another aspect, the adjusted molding process conditions comprise a relatively low barrel temperature and a relatively fast injection speed as compared to a plurality of different molding conditions comprising a variety of combinations of barrel temperatures and injection speeds.

According to an aspect of the instant disclosure, a method for manufacturing a molded polymeric article having enhanced flame retardance, comprises: (a) selecting a moldable polymeric material, wherein the moldable polymeric material is transparent; (b) determining molding process conditions that result in a desired residual stress profile for a molded flame bar manufactured from the selected moldable polymer material; and (c) manufacturing a molded article from the selected moldable polymeric material according to the mold forming process conditions identified in step b).

In another aspect of the instant disclosure, a method for manufacturing a flame retardant molded polymeric article, comprises: (a) selecting a moldable polymeric material, wherein the moldable polymeric material is transparent;

(b) determining a desired flame retardancy for a molded article comprising the selected polymeric material; (c) identifying a residual stress profile for the molded article that correlates to the desired flame retardancy; and (d) adjusting a molding process condition so as to produce the molded polymeric article having the identified stress profile.

In yet another aspect of the instant disclosure, a method for monitoring flame retardant properties of a molded polymeric article, comprises: (a) selecting a moldable polymeric material to be molded into a transparent flame bar; (b) selecting a desired level of flame retardance for the transparent flame bar; (c) molding the selected polymeric material under molding process conditions effective to produce a molded polymeric article, wherein the molded polymeric article is a molded flame bar exhibiting a predetermined residual stress profile; and (d) measuring flame retardance of the molded flame bar to determine whether the process conditions of step c) are effective to produce a flame bar exhibiting the desired flame retardance selected in step b).

In the various aspects of the instant disclosure: (i) the molding process condition comprises at least one of barrel temperature, injection speed, hold pressure, and switch point; and/or (ii) the molding process condition comprises barrel temperature and injection speed; and/or (iii) the molding process condition comprises a relatively low barrel temperature and a relatively fast injection speed as compared to a plurality of different molding conditions comprising a variety of combinations of barrel temperatures and injection speeds; and/or (iv) the residual stress profile for a molded flame bar is a residual stress profile indicative of relatively lower stress at or near a gate end of the flame bar; and/or (v) the residual stress profile is further indicative of a maximum residual stress occurring at a distance furthest from the gate end of the flame bar; and/or (vi) the manufactured molded article is a thin walled article having a thickness less than 2.0 mm; and/or (vii) the manufactured molded article is a thin walled article having a thickness less than 1.8 mm; and/or (viii) the manufactured molded article is a thin walled article having a thickness less than 0.8 mm; and/or (ix) the manufacture article exhibits a flame retardance characterized as a V0 flame retardance classification under the UL-94 test method; and/or (x) the molded article exhibits a transmittance greater than 89% at a thickness of 3.0 mm, as determined according to ASTM D1003; and/or (xi) the molded polymeric article is manufactured by injection molding; and/or (xii) the mold forming process conditions comprise a determined optimum barrel temperature and a determined optimum injection speed; and/or (xiii) the selected polymeric material is a polycarbonate; and/or (xiv) the polycarbonate is a linear polycarbonate, branched polycarbonate, or combination of linear and branched polycarbonate.

Also disclosed herein are articles of manufacture made according to any of the above methods.

Examples

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Efforts have been made to ensure accuracy with respect to numbers (*e.g.,* amounts, temperature, etc.), but some minor errors and deviations should be accounted for. Unless indicated otherwise, parts are parts by weight, temperature is in C or is at ambient temperature, and pressure is at or near atmospheric.

In the following examples, a grade of flame retardant polycarbonate, commercially available as Lexan 9945A from SABIC Innovative Plastics, was evaluated (Lexan is a Trademark of SABIC Innovative Plastics IP BV). Specifically, the role of varying injection molding process conditions on flame retardance were investigated. These process conditions were mold and barrel temperatures, injection speed, switch point, and holding pressure. Experiments and Measurements

For the described experiments, injection molded flame bars of dimensions 125 mm x 12 mm x 1.8 mm were molded on a 180-ton injection molding machine. A four factor, 2 level factorial design of experiment (DOE) was used to evaluate barrel temperature, injection speed, hold pressure, and switch point, each at a relatively high value and a relatively low value. The relatively low and relatively high values encompass typical conventional polycarbonate injection molding processing conditions.

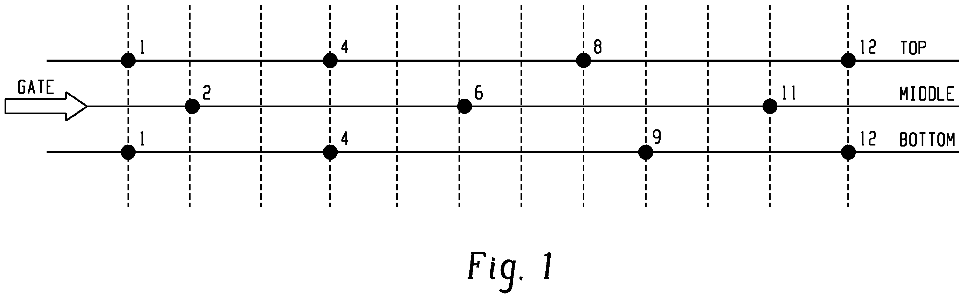

Residual stress measurements for the flame bars were evaluated using a Strainoptic Technologies SCA2004P, Measurement system equipped with software v.1.1.1 to develop a stress map of the flame bar. The template used to develop this map is shown in Figure 1. The points in the top, middle and bottom rows were labeled 1-14. These points will be used and referred to in subsequent Figures and Tables as reference. Three bars were used for measurement. The mean of three measurements at each point on the template on three respective bars has been presented.

Flame property measurement: Flammability testing was conducted using the standard Underwriters Laboratory UL 94 test method (7 day conditioning), except that 20 bars rather than the usual 5 bars were tested. Specimens are to be preconditioned in an air-circulating oven for 168 hours at $70 \pm 1°C$ and then cooled in the desiccator for at least 4 hours at room temperature, prior to testing. Once removed from the desiccator, specimens were tested within 30 minutes. Burning was initiated at the gate side until specified otherwise. The data was analyzed by calculation of the average flame out time (FOT), standard deviation of the flame out time and the total number of drips. Statistical methods were used to convert the data to a probability that a specific formulation would achieve a first time V0 pass or "p(FTP)" in the standard UL 94 testing of 5 bars. Preferably p(FTP) values will be 1 or very close to 1 for high confidence that a sample formulation would achieve a V0 rating in UL 94 testing. A p(FTP) value below 0.85 for a sample formulation was considered too low to predict a UL 94 rating of V0 for that formulation.

Results and Discussion

From the above-described experiment, a transfer function linking p(FTP) was determined, *i.e.,* a model of flame performance to statistically significant processing parameters that affect it. This is shown in Equation 1, which is the result of ANOVA analysis. The equation shows that two significant factors control the flame behavior of this material; barrel temperature and injection speed.

$$Equation\ 1: \quad p(FTP) = -4.207 + 0.01\ x\ Barrel\ Temp + 2.59\ x\ Injection\ Speed - 5.32{\cdot}10^{-3}\ x$$
$$Barrel\ Temp\ x\ Injection\ Speed$$

Model characteristics are further reflected in Table 1 below.

Table 1:

| | |
|---|---|
| R-Squared | 0.92 |
| Adj R-Squared | 0.90 |
| Pred R-Squared | 0.81 |

The values in Table 1 show the statistical confidence in the transfer function in equation 1. Specifically, the model characteristics shown in Table 1 indicate that the model is able to explain about 90% of the observations of the experiment.

Results and Discussion

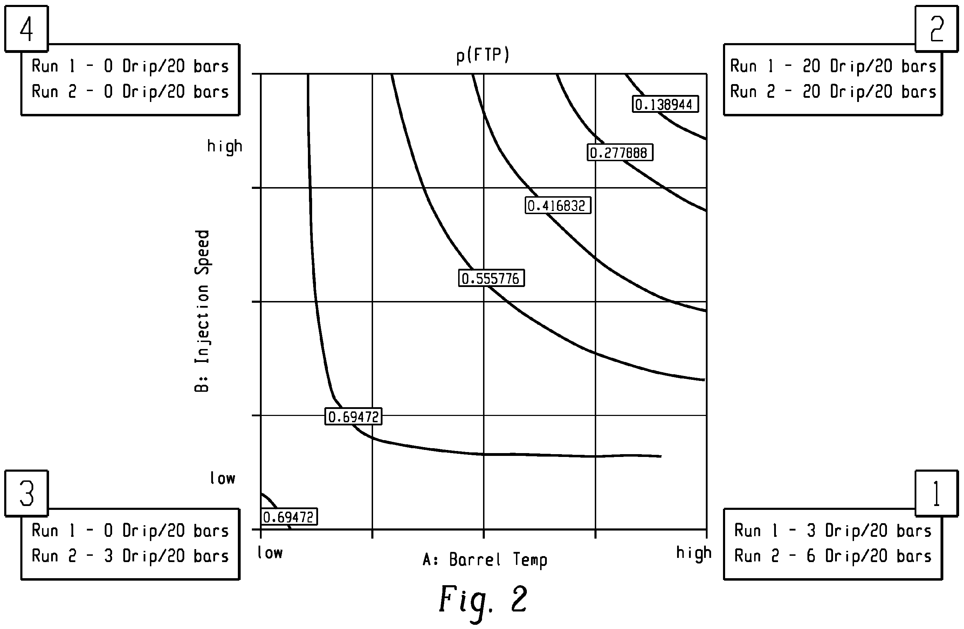

From the above-described experiment, a transfer function linking p(FTP) was determined, *i.e.,* an identification of favorable parameters for flame retardance performance. The corresponding contour plots of p(FTP) values as a function of barrel temperature and injection speed at constant holding pressure and switch point is plotted in Figure 2. The boxes in the four corners show the number of drips obtained for 2 replicates of flame tests, 20 bar each. Based on Figure 2 and associated number of drips for the four corners, it was determined that lower barrel temperature and high injection speed leads to improved flame retardance performance as reflected by 0 drips/ 20 bars in bar 4. It was also determined that high barrel temperature and high injection speed leads to detrimental flame retardance performance, as reflected by 20 drips/ 20 bars in bar 2. To explain the above observations, the next step was to evaluate the impact of differences in these process conditions on residual stresses in the bars respectively.

Qualitative stress determination

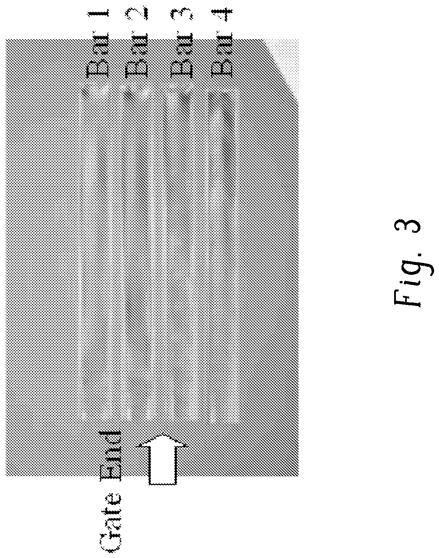

To study the resulting stress profiles qualitatively, a birefringence image comparison was made by placing the bars in between the two cross-polarizers. The image is shown in Figure 3. Since this is a qualitative image, it is difficult to relate the information to the FR properties of interest, most notably the number of drips for the 4 bars. However, it can be concluded that stress profiles varied in bars 1 thru 4 that were molded under different conditions.

Quantitative stress determination:

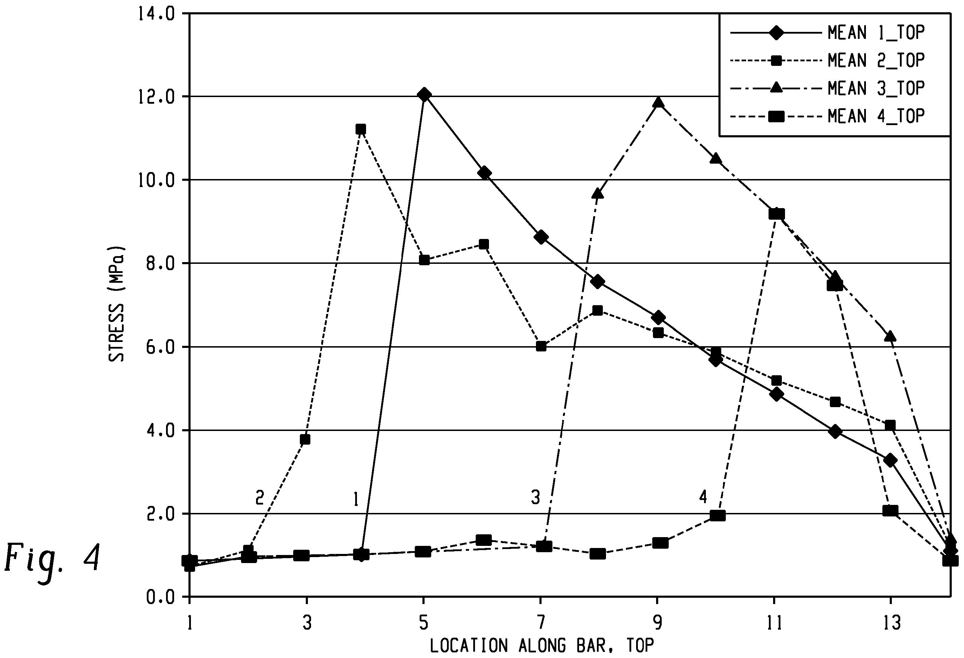

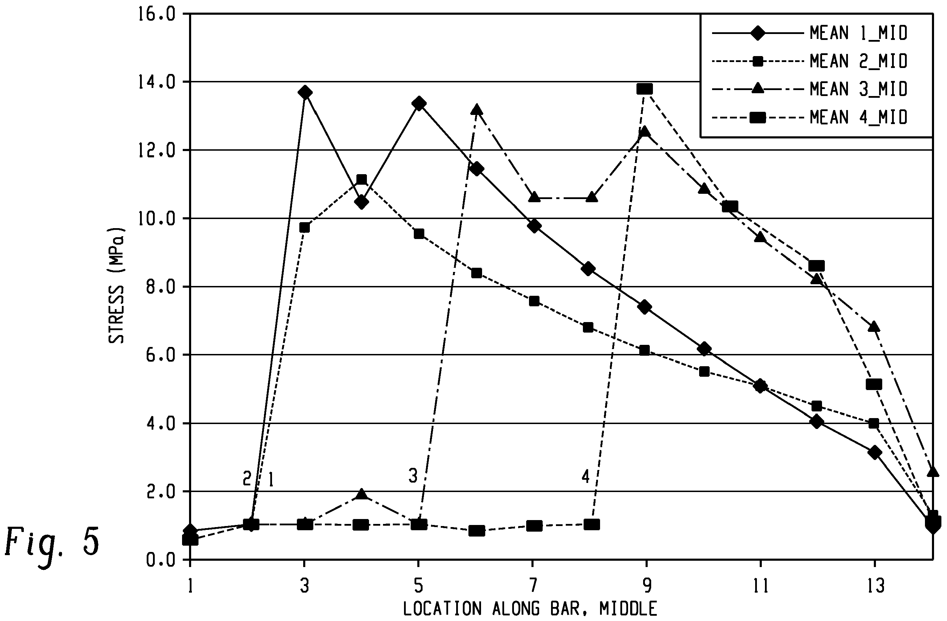

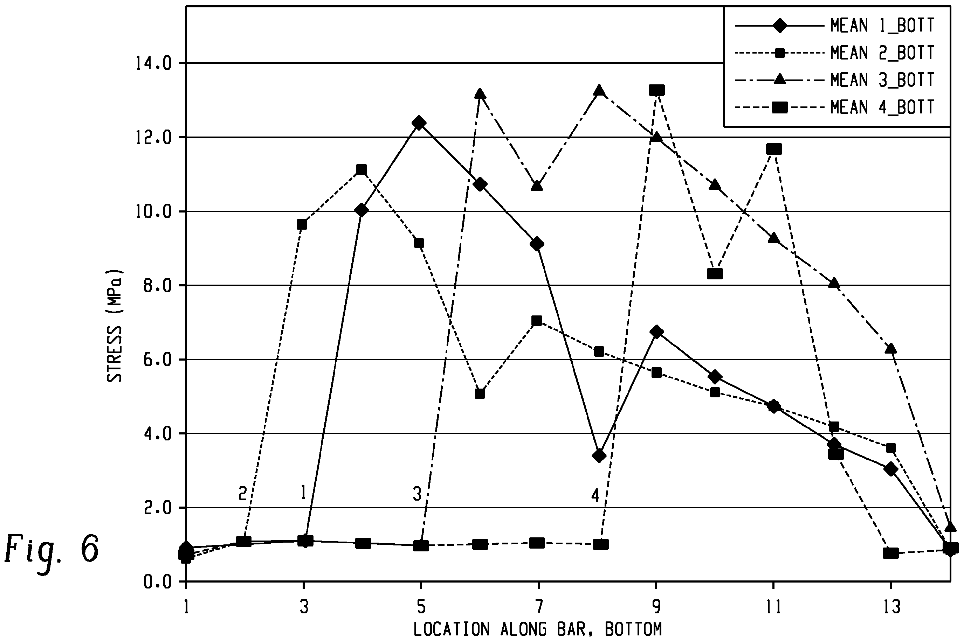

To quantify the residual stress differences in the bars, the technique described in section 'Experiments and Measurements' was applied. Specifically, the stress map at the three locations; top, middle and bottom were measured and are plotted in Figures 4 thru 6. The observations from Figures 4 thru 6 include minimum stress across all bars is ~ 1 megaPascal (MPa); maximum stress across all bars is ~ 12-14 MPa; and for all bars 1 thru 4 the rate of increase of this rise in stress, *i.e.,* slope of stress vs location increase is constant. However, the stress distribution in the bars varies as one travels from the gate side to the non-gate side. The stress begins to rise toward its maximum value at different locations in the bars. These locations were found to correlate with the resulting flame retardance performance of bars. Table 2 shows points at top, middle, bottom location of the bars where stresses begin to rise toward their maximum values.

Table 2:

|  | Bar 1 | Bar 2 | Bar 3 | Bar 4 |
|---|---|---|---|---|
| Top | 4 | 2 | 7 | 9 |
| Middle | 2 | 2 | 5 | 8 |
| Bottom | 3 | 2 | 5 | 8 |

Table 2: This data shows those points in Figures 4-6 at which the stress begins to increase toward their respective maximum value in the four bars. From Table 2 and data of Figures 4 - 6, it was observed that the stress begins to rise toward its maximum value at a greater distance from the gate for those bars where number of drips is lower, *i.e.,* flame retardance properties are better. In other words, the distance from the gate end for bar 4 > bar 3 > bar 1 > bar 2. Thus, it was observed there is inverse correlation between number of drips, i.e. flame retardant (FR) performance and distance of low and uniform stress. To confirm these observations were due to stress profile and not due to any other extraneous factor, a different set of bars made of the same material were burned from the non-gate end. The flame results of this burn show that difference in flame behavior between the bars is insignificant. All bars exhibit similar dripping behavior. Thus, it was concluded that stress profile does affect flame retardant behavior of the evaluated grade of polycarbonate.

It will be apparent to those skilled in the art that various modifications and variations can be made in the present invention without departing from the scope of the invention, as defined in the appended claims. Other embodiments of the invention will be apparent to those skilled in the art from consideration of the specification and practice of the invention disclosed herein. It is intended that the specification and examples be considered as exemplary only, with the true scope of the invention being indicated by the following claims.

## Claims

1. A method for manufacturing a flame retardant molded polymeric article by injection molding, wherein the moldable polymeric material is polycarbonate, the method comprising:

   a) selecting a polycarbonate that is transparent;
   b) determining a desired flame retardancy for a molded article comprising the selected polycarbonate;
   c) identifying a residual stress profile for a flame bar molded from the polycarbonate that correlates to the desired flame retardancy; and
   d) adjusting a molding process condition so as to produce the molded polymeric article having the identified stress profile,

   wherein the molding process condition comprises barrel temperature and injection speed, and
   wherein the molded polymeric article exhibits a flame retardance characterized as a V0 flame retardance classification under the UL-94 test method.

2. The method of Claim 1, wherein the molding process condition comprises further at least one of hold pressure and switch point,

3. The method of any of Claims 1 - 2, wherein the residual stress profile for the molded flame bar is a residual stress profile indicative of relatively lower stress at or near a gate end of the flame bar.

4. The method of any of Claims 1 - 3, wherein the residual stress profile is further indicative of a maximum residual stress occurring at a distance furthest from the gate end of the flame bar.

5. The method of any of Claims 1 - 4, wherein the manufactured molded article is a thin walled article having a thickness less than 2.0 mm.

6. The method of any of Claims 1-5, wherein the molded article exhibits a transmittance greater than 89% at a thickness of 3.0 mm, as determined according to ASTM D1003.

7. The method of any of Claims 1 - 6, wherein the mold forming process conditions comprise a determined optimum barrel temperature and a determined optimum injection speed.

8. The method of Claim 1-7, wherein the polycarbonate is a linear polycarbonate, branched polycarbonate, or combination of linear and branched polycarbonate,

## Patentansprüche

1. Ein Verfahren zur Herstellung eines flammenhemmenden polymeren Formteils durch Spritzgießen, worin das gießbare polymere Material Polycarbonat ist, wobei das Verfahren Folgendes umfasst:

   a) Auswählen eines Polycarbonats, das transparent ist;
   b) Festlegen einer gewünschten Flammenhemmung für ein Formteil umfassend das gewählte Polycarbonat;
   c) Ermitteln eines Eigenspannungsprofils für einen Flammenstab geformt aus dem Polycarbonat, das mit der gewünschten Flammenhemmung korreliert; und
   d) Einstellen einer Formungsprozess-Bedingung, um das polymere Formteil mit dem ermittelten Spannungsprofil herzustellen, worin die Formungsprozess-Bedingung Kesseltemperatur und Einspritzgeschwindigkeit umfasst, und

   worin das polymere Formteil eine Flammenhemmung charakterisiert als eine Flammenhemmung-Klassifikation V0 nach dem UL-94 Testverfahren zeigt.

2. Das Verfahren gemäß Anspruch 1, worin die Formungsprozess-Bedingung weiter mindestens eine von Haltedruck und Schaltpunkt umfasst.

3. Das Verfahren gemäß irgendeinem der Ansprüche 1-2, worin das Eigenspannungsprofil für den geformten Flammenstab ein Eigenspannungsprofil ist, das auf relativ geringere Spannung am oder nahe einem Ausgangsende des Flammenstabs hindeutet.

4. Das Verfahren gemäß irgendeinem der Ansprüche 1-3, worin das Eigenspannungsprofil weiter auf eine maximale bei einer Entfernung am weitesten weg von dem Ausgangsende des Flammenstabs auftretende Eigenspannung hindeutet.

5. Das Verfahren gemäß irgendeinem der Ansprüche 1-4, worin das hergestellte Formteil ein dünnwandiger Artikel ist mit einer Dicke von weniger als 2,0 mm.

6. Das Verfahren gemäß irgendeinem der Ansprüche 1-5, worin das Formteil eine Transmission von größer als 89% bei einer Dicke von 3,0 mm zeigt, wie bestimmt gemäß ASTM D1003.

7. Das Verfahren gemäß irgendeinem der Ansprüche 1-6, worin die Gießformungsprozess-Bedingungen eine festgelegte optimale Kesseltemperatur und eine festgelegte optimale Einspritzgeschwindigkeit umfassen.

8. Das Verfahren gemäß Anspruch 1-7, worin das Polycarbonat ein lineares Polycarbonat, verzweigtes Polycarbonat, oder eine Kombination aus linearem und verzweigtem Polycarbonat ist.

## Revendications

1. Procédé de fabrication d'un article polymère moulé résistant à la flamme par moulage par injection, dans lequel le matériau polymère moulable est du polycarbonate, le procédé comprenant :

   a) la sélection d'un polycarbonate qui est transparent ;
   b) la détermination d'une résistance à la flamme souhaitée pour un article moulé comprenant le polycarbonate sélectionné ;
   c) l'identification d'un profil de contrainte résiduelle pour une barre pare-feu moulée à partir du polycarbonate qui est en corrélation avec la résistance à la flamme souhaitée ; et
   d) l'ajustement d'une condition de procédé de moulage de façon à produire l'article polymère moulé ayant le profil de contrainte identifié,

**EP 2 768 651 B1**

dans lequel la condition de procédé de moulage comprend la température du cylindre et la vitesse d'injection, et dans lequel l'article polymère moulé présente une résistance à la flamme **caractérisée** comme étant de la classe de résistance à la flamme V0 dans le procédé d'essai UL-94.

2. Procédé selon la revendication 1, dans lequel la condition de procédé de moulage comprend en outre au moins l'un de la pression de maintien et du point de basculement.

3. Procédé selon l'une quelconque des revendications 1 à 2, dans lequel le profil de contrainte résiduelle pour la barre pare-feu moulée est un profil de contrainte résiduelle indiquant une contrainte relativement inférieure au niveau ou près d'une extrémité de seuil de la barre pare-feu.

4. Procédé selon l'une quelconque des revendications 1 à 3, dans lequel le profil de contrainte résiduelle indique en outre une contrainte résiduelle maximale existant à une distance la plus éloignée de l'extrémité de seuil de la barre pare-feu.

5. Procédé selon l'une quelconque des revendications 1 à 4, dans lequel l'article moulé fabriqué est un article à paroi fine ayant une épaisseur inférieure à 2,0 mm.

6. Procédé selon l'une quelconque des revendications 1 à 5, dans lequel l'article moulé présente une transmittance supérieure à 89 % à une épaisseur de 3,0 mm, telle que déterminée selon la norme ASTM D1003.

7. Procédé selon l'une quelconque des revendications 1 à 6, dans lequel les conditions du procédé de moulage comprennent une température optimale déterminée du cylindre et une vitesse d'injection optimale déterminée.

8. Procédé selon une revendication 1 à 7, dans lequel le polycarbonate est un polycarbonate linéaire, un polycarbonate ramifié, ou une combinaison de polycarbonate linéaire et ramifié.

*Fig. 1*

EP 2 768 651 B1

*Fig. 2*

*Fig. 3*

EP 2 768 651 B1

Fig. 4

EP 2 768 651 B1

Fig. 5

Fig. 6

EP 2 768 651 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5324473 A
- EP 0595141 A1
- WO 8910829 A1
- EP 0524731 A1

**Non-patent literature cited in the description**

- **J. GREENER ; G.H. PEARSON.** Orientation Residual Stresses and Birefringence in Injection Molding. *JOURNAL OF RHEOLOGY,* 1983, vol. 27 (2), 115-134